(19)

Europäisches
Patentamt
European
Patent Office
Office européen
des brevets

(11)  **EP 4 296 379 A1**

(12)  # EUROPEAN PATENT APPLICATION
published in accordance with Art. 153(4) EPC

(43) Date of publication:
**27.12.2023  Bulletin 2023/52**

(21) Application number: **22756028.1**

(22) Date of filing: **08.02.2022**

(51) International Patent Classification (IPC):
*C21D 8/02* [(2006.01)]     *C21D 9/00* [(2006.01)]
*C22C 38/00* [(2006.01)]     *C22C 38/60* [(2006.01)]
*C21D 1/18* [(2006.01)]      *F16D 65/12* [(2006.01)]

(52) Cooperative Patent Classification (CPC):
**C21D 1/18; C21D 8/02; C21D 9/00; C22C 38/00;
C22C 38/60; F16D 65/12**

(86) International application number:
**PCT/JP2022/004892**

(87) International publication number:
**WO 2022/176707 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.02.2021  JP 2021024541**

(71) Applicant: **NIPPON STEEL Stainless Steel
Corporation
Tokyo 100-0005 (JP)**

(72) Inventors:
- **YOSHIZAWA, Toshiki
  Tokyo 100-0005 (JP)**
- **HAMADA, Jun-ichi
  Tokyo 100-0005 (JP)**

(74) Representative: **Vossius & Partner
Patentanwälte Rechtsanwälte mbB
Siebertstraße 3
81675 München (DE)**

(54)  **MARTENSITIC STAINLESS STEEL PLATE FOR BRAKE DISK ROTOR, BRAKE DISK ROTOR,
AND METHOD FOR MANUFACTURING MARTENSITIC STAINLESS STEEL PLATE FOR BRAKE
DISK ROTOR**

(57)  A martensitic stainless steel sheet for a brake disc rotor, characterized by containing predetermined components and having, in a mother phase, precipitates with a particle size of 2 $\mu$m or less and a density of 0.01 to 20 pieces/$\mu$m$^2$. The precipitates finely present in hot rolling and hot-rolled sheet annealing improves productivity in hardening, improves temper softening resistance of the steel sheet in use as a component, inhibits cracking in hot stamping, and inhibits reduction in high-temperature strength. Accordingly, the martensitic stainless steel sheet excellent in temper softening resistance, hardenability, formability, and high-temperature strength that is applicable to the disc rotor is provided.

Processed by Luminess, 75001 PARIS (FR)

EP 4 296 379 A1

**Description**

TECHNICAL FIELD

The present invention relates to a martensitic stainless steel sheet for a brake disc rotor that is excellent in hardenability, formability, temper softening resistance, and high-temperature strength, a brake disc rotor, and a method of producing the martensitic stainless steel sheet for the brake disc rotor, the stainless steel sheet having excellent productivity, achieving reduction in a pad wear amount, having stable hardness, and being suitable for application to a disc rotor or the like needed to be thin and light.

BACKGROUND ART

A disc brake is widely used as a brake system. The disc brake includes a disc-shaped structure, called a disc rotor coupled to a tire. Pressing the disc rotor between brake pads generates friction to convert kinetic energy to thermal energy, thus reducing speed of automobiles or two-wheeled vehicles. Hereinafter, the disc rotor for the disc brake is also referred to as a "brake disc rotor".

As a material for automobile disc rotors, flake graphite cast iron (hereinafter referred to as cast iron) is used in view of thermal conductivity, costs, and the like. Cast iron, which contains no element for improving corrosion resistance, has poor corrosion resistance, and red rust is formed as soon as cast iron is left. The red rust conventionally is not so noticeable by virtue of a wheel shape and a disc rotor position lower than a line of sight. However, aluminum is used for a wheel material to meet the recent demand for improvement in fuel efficiency, and the disc rotor becomes prominent by using thinner spokes for the wheel, which makes the disc rotor rust unignorable. Improvement in corrosion resistance of the disc rotor is thus required.

Under recent strengthening of environmental regulations, automobiles are strongly demanded to improve fuel efficiency, leading to the needs for a thin-and-light disc rotor. However, cast iron, which has poor strength and is produced by casting, has a limitation in becoming thinner. Further, a maximum reachable temperature at braking of the automobile is said to be approximately 700 degrees C. Furthermore, a reachable temperature under driving conditions of frequent braking on a mountain road or the like may be 300 degrees C. Since a thin disc rotor made from cast iron inferior in high-temperature strength cannot exhibit the strength required at high temperatures, it is difficult to reduce the thickness and weight of the disc rotor. Further, since cast iron is molded by casting, thinning of the disc rotor deteriorates metal flow, which may result in a failure of molding.

A material excellent in corrosion resistance is exemplified by stainless steel. Specifically, martensitic stainless steel (e.g., SUS410) is widely used for two-wheeled vehicles such as a motorcycle. This is because the disc rotor of the two-wheeled vehicle is exposed and easily-noticeable, and corrosion resistance thereof is considered as important. On the other hand, stainless steel is inferior in thermal conductivity to cast iron. The two-wheeled vehicle is provided with an exposed brake system excellent in cooling performance, which allows stainless steel to be used for the two-wheeled vehicle under normal conditions with no problem. However, if the two-wheeled vehicle is in a heavy braking condition such as a race, the disc rotor would be excessively heated to increase a wear amount of brake pads.

For automobiles, a brake system including a tire is accommodated in a wheelhouse, and thus the disc rotor has difficulty in cooling. This makes it difficult to use stainless steel inferior in thermal conductivity for the disc rotor of the automobile. For recent EV, FCV, HV, and the like, however, adoption of a "regenerative brake" that recovers electrical energy converted from kinetic energy during running has been sharply increased. By virtue of the application of the regenerative brake, frictional heat generated by friction between the disc rotor and the pads is reduced, making it likely that stainless steel inferior in thermal conductivity to cast iron is used for the disc brake.

Another problem that prevents stainless steel from being applied to the automobile disc brake is formability. The disc rotor of the two-wheeled vehicle, which is in a form of a ring-shaped disc, requires no large machining, because it is produced by blanking sheet-shaped stainless steel and then performing high-frequency hardening. On the other hand, the current disc rotor of the automobile is in a form of a disc whose center portion is squeezed, called a hat shape, and is produced by casting. Deep drawing is required to produce the disc rotor having the above shape in machining of stainless steel as a material. However, stainless steel used for the two-wheeled vehicle is martensitic stainless steel having extremely high hardness, which makes deep drawing difficult. In order to solve this problem, hot stamping where press forming is performed at high temperature has been increasingly used in recent years. This allows even stainless steel to be formed into a hat shape with high accuracy.

In the recent automobile circumstances, the disc rotor needs to be made from stainless steel to meet the demand for appearance, formability, and reduction in size and weight.

As described above, the automobile brake system that includes the tire is accommodated in the wheelhouse, and thus the disc rotor has difficulty in cooling and the thermal conductivity is low. Further, even the disc rotor of the two-wheeled vehicle is excessively heated in a heavy braking condition such as a race. When martensitic stainless steel is held at high temperatures, carbon and nitrogen precipitate or dislocation recovery occurs, resulting in temper softening. The temper softening makes the pad wear amount excessively large. Extraordinary worn disc rotor and brake pads destabilize the braking function and reduce the lifetime. That is, in order to apply martensitic stainless steel to the automobile disc rotor, the wear amount of brake pads needs to be reduced.

Patent Literatures 1 and 2 disclose a disc rotor made from stainless steel. These literatures describe steel of which temper softening resistance is improved by defining the prior austenite grain size and precipitated Nb. The literatures relate to an invention for improving the temper softening resistance at 600 degrees C. Further, Patent Literatures 3 and 4 describe steel of which temper softening resistance is improved by defining the prior austenite grain size and precipitated Nb and Cu. The literatures relate to an invention for improving the temper softening resistance at 650 degrees C. In all of the above inventions, stainless steel is used as a component and precipitates that precipitate when the component is exposed to high temperature upon braking are utilized. When the time during which the component is exposed to high temperature is short, the requirement for precipitation may not be satisfied.

CITATION LIST

PATENT LITERATURE(S)

Patent Literature 1: JP 4569360 B
Patent Literature 2: WO2008/044299
Patent Literature 3: WO2007/122754
Patent Literature 4: JP 5200332 B

SUMMARY OF THE INVENTION

PROBLEM(S) TO BE SOLVED BY THE INVENTION

The invention relates to a stainless steel sheet for a brake disc rotor excellent in hardenability, formability, temper softening resistance, and high-temperature strength. A component subjected to the problem(s) to be solved by the invention is a braking component, specifically, a disc rotor.

As described above, the disc rotor of the two-wheeled vehicle, which requires no large machining of the stainless steel sheet, is produced by high-frequency hardening, and the disc rotor of the automobile is produced by hot stamping where press forming is performed at high temperature. The stainless steel sheet for hot stamping is produced by hot rolling and hot-rolled sheet annealing. The high temperature treatment of hot stamping also serves as the hardening process. In view of productivity, the heat treatment of hardening is preferably performed at low temperature in a short time. In conventional martensitic stainless steel, however, coarse Cr carbonitrides precipitate in the hot-rolled sheet annealing for producing the stainless steel sheet. C and N forming a solid solution are required to provide sufficient hardness as the disc rotor. It is thus necessary to dissolve the coarse Cr carbonitrides precipitating in the stainless steel sheet through heating at high temperature in the heat treatment of hardening. That is, the existing martensitic stainless steel needs heating at high temperature in molding, and hardenability improvement is required to achieve good productivity. In order to enhance the productivity of the existing martensitic stainless steel, excellent hardenability is required to enable Cr carbonitrides to dissolve even in the heat treatment at low temperature in a short time.

Since the automobile disc rotor is in a hat shape, the steel sheet is required to have formability. Specifically, press formability at high temperature is needed for hot stamping for molding the steel sheet into the hat shape.

Excellent temper softening resistance is required for using the steel sheet as the brake disc rotor. Martensitic stainless steel is applicable to typical two-wheeled vehicles of which maximum reachable temperature is approximately 500 degrees C. However, brake discs of four-wheeled vehicles and two-wheeled vehicles for racing purpose have high reachable temperature to cause temper softening considerably, making the martensitic stainless steel application to those vehicles difficult. Patent Literatures 1 to 4 disclose the temper softening resistance at 600 degrees C and 650 degrees C, but fail to disclose the temper softening resistance at 700 degrees C needed for the invention.

Further, excellent high-temperature strength is required for using the steel sheet as the brake disc rotor. The reachable temperature is approximately 100 degrees C in normal driving on a city road, and about 300 degrees C (near 700 degrees C at a maximum) in driving on a mountain road. The strength in an intermediate temperature range to a high temperature range is thus needed for thinning the disc rotor.

The invention is to provide a martensitic stainless steel sheet for a brake disc rotor that is excellent in hardenability and formability for machining the steel sheet into the brake disc rotor and that is excellent in temper softening resistance and high-temperature strength when used as the brake disc rotor, a brake disc rotor using the same, and a method for producing the martensitic stainless steel sheet for the brake disc rotor.

MEANS FOR SOLVING THE PROBLEM(S)

In order to solve the above problem, the inventors have focused on and detailedly studied precipitates in the stainless steel sheet. The steel sheet used as a brake disc rotor, which is an object of the invention, is produced through hot rolling and hot-rolled sheet annealing. Precipitates precipitate in the steel sheet during the hot rolling and hot-rolled sheet annealing. Precipitates include Cr carbonitrides and any other substances. Among the above precipitates, the Cr carbonitride precipitate is appropriately controlled for the size and dispersion state to dissolve at low temperature in a short time when heated for molding. The hardenability thereof is thus improved, leading to good productivity. Any other precipitates than the Cr carbonitrides do not dissolve when heated for molding, but are finely present in a product. The fine precipitates inhibit dislocation recovery in a case where the steel sheet is used as a component, improving the temper softening resistance. However, if the Cr carbonitride precipitate is coarse, dissolution thereof takes time or needs high temperature, reducing productivity. Further, if any other precipitates than the Cr carbonitrides are coarse, the steel sheet is likely to crack in hot stamping and in use, and the temper softening resistance is not likely be improved to provide poor high-temperature strength. In view of the above, the inventors thought that appropriately controlling chemical components in steel and hot rolling conditions would make the precipitates in the steel sheet fine to achieve the followings: good productivity by virtue of hardenability improvement, inhibition of cracking in hot stamping, inhibition of poor high-temperature strength while keeping the temper softening resistance when the steel sheet is used as a component. The inventors studied intensely to achieve the above, and obtained the following findings.

The dislocation recovery is inhibited in hot rolling and the precipitates precipitating in the hot rolling and hot-rolled sheet annealing become fine by controlling chemical components in steel appropriately, setting a heating temperature before hot rolling in a range from 1,000 to 1,200 degrees C, setting a finishing temperature for hot rolling at 800 degrees C or less, setting a cooling rate at 10 degrees C/sec or more, and setting a winding temperature at 550 degrees C or less. Making the precipitates in the hot rolling and hot-rolled sheet annealing fine makes the Cr carbonitride precipitate fine, improving hardenability. This allows the Cr carbonitride precipitate to dissolve even when heated for hardening at low temperature in a short time, and hardening hardness sufficient as a disc rotor is obtainable. Further, making any other precipitates than the Cr carbonitrides fine improves the temper softening resistance of the steel sheet in use as a component, inhibits the cracking in hot stamping, and inhibits the decrease in high-temperature strength. Since the precipitates are present before the steel sheet is used as a component (before the steel sheet is produced as a product sheet), high strength is achievable even in a temperature range where no temper softening occurs. Most of the precipitates in the hot rolling and hot-rolled sheet annealing are carbonitrides and intermetallic compounds of Fe, Ti, Nb, V, Cu, Mo, W, Zr, Ta, Hf, and the like, and metal Cu. Accordingly, the stainless steel sheet excellent in temper softening resistance, hardenability, formability, and high-temperature strength that is applicable to a disc rotor is successfully provided.

A gist of the invention for solving the above problems is as follows.

(1) A martensitic stainless steel sheet for a brake disc rotor, containing: 0.001 to 0.500 mass% of C; 0.001 to 0.500 mass% of N; 0.01 to 5.00 mass% of Si; 0.010 to 12.000 mass% of Mn; 0.001 to 0.100 mass% of P; 0.0001 to 1.0000 mass% of S; 10.0 to 35.0 mass% of Cr; 0.010 to 5.000 mass% of Ni; 0.0010 to 3.0000 mass% of Cu; 0.0010 to 3.0000 mass% of Mo; 0.0010 to 1.0000 mass% of Nb; 0.0010 to 1.0000 mass% of V; and a balance consisting of Fe and impurities, in which precipitates in a mother phase have an average particle size of 2 $\mu$m or less and a density of 0.01 to 20 pieces/$\mu$m$^2$, and a hardening hardness index A represented by a formula below is in a range from 200 to 800, A = 2566[%C] + 1282[%N] - 12[%Si] + 4[%Cu] - 6[%Mo] - 184[%Nb] - 125[%V] + 239.

(2) The martensitic stainless steel sheet for the brake disc rotor according to (1), further containing, in place of a part of the Fe, one or more of 0.001 to 1.00 mass% of Ti; 0.0001 to 0.0100 mass% of B; 0.001 to 4.0 mass% of Al; 0.001 to 3.0 mass% of W; 0.001 to 1.00 mass% of Sn;0.0001 to 0.0100 mass% of Mg; 0.001 to 0.50 mass% of Sb; 0.001 to 1.000 mass% of Zr; 0.001 to 1.00 mass% of Ta; 0.001 to 1.000 mass% of Hf; 0.001 to 1.00 mass% of Co; 0.0001 to 0.0200 mass% of Ca; 0.001 to 0.50 mass% of REM; and 0.0001 to 0.5000 mass% of Ga.

(3) The martensitic stainless steel sheet for the brake disc rotor according to (1) or (2), in which breaking elongation at 1,050 degrees C is 50% or more.

(4) The martensitic stainless steel sheet for the brake disc rotor according to any one of (1) to (3), in which relative to hardness obtained by performing a hot-stamping simulated heat treatment, which is hereinafter simply referred to as a "simulated heat treatment", including heating to 1,050 degrees C, retaining for 5 seconds or more, and then water-cooling, a decrease in hardness after 10-minute tempering at 700 degrees C performed subsequent to the simulated heat treatment is 150 or less in terms of Hv.

(5) The martensitic stainless steel sheet for the brake disc rotor according to any one of (1) to (4), in which 0.2% proof stress at 700 degrees C obtained by performing a hot-stamping simulated heat treatment, which is hereinafter simply referred to as the "simulated heat treatment", including heating to 1,050 degrees C, retaining for 5 seconds or more, and then water-cooling is 50 MPa or more.

(6) A brake disc rotor made using the martensitic stainless steel sheet for the brake disc rotor according to any one of (1) to (5).

(7) A method of producing the martensitic stainless steel sheet for the brake disc rotor according to any one of (1) to (5), the method including making a finishing temperature for hot rolling 800 degrees C or less and making a winding temperature for hot rolling 550 degrees C or less.

The invention improves hardenability and formability of the stainless steel sheet, improves temper softening resistance and high-temperature strength after the simulated heat treatment on the stainless steel sheet, provides a material suitable for disc rotors of automobiles and two-wheeled vehicles, and exhibits great effects on the appearance improvement, safe braking in various environments, and the like.

DESCRIPTION OF EMBODIMENT(S)

The reasons for defining contents of respective chemical components in steel will be described below.

Here, a martensitic stainless steel sheet refers to a stainless steel sheet in which a martensite phase reaches 80% or more in terms of an area by performing the hardening process. When the martensitic stainless steel sheet is in a form of a hot-rolled sheet (stainless steel sheet before hot-rolled annealing), the martensite phase accounts for most of the structure. When the martensitic stainless steel sheet is in a form of a hot-rolled and annealed sheet (stainless steel sheet of the invention), a ferrite phase accounts for most of the structure. A product after the hardening process of hot stamping (brake disc rotor of the invention) has a martensite phase or a structure including the martensite phase and the ferrite phase. Further, an austenite phase may slightly remain.

Hereinafter, explanation is made about a preferred component composition (mass%) of the stainless steel sheet of the invention.

C is an element that forms a solid solution in a mother phase and greatly affects hardness. C may generate carbides in some heat treatments, decreasing formability, corrosion resistance, and high-temperature strength. The C content is thus Content (A) below. Since an excessively small content of C leads to increase in refining costs, Content (B) is preferable. Content (C) is more preferable.

(A) = 0.001 to 0.500%
(B) = 0.010 to 0.300%
(C) = 0.030 to 0.070%

Similar to C, N is an element that forms a solid solution in a mother phase and greatly affects hardness. N may generate nitrides in some heat treatments, decreasing formability, corrosion resistance, and high-temperature strength. The N content is thus Content (A) below. Since an excessively small content of N leads to increase in refining costs, Content (B) is preferable. Content (C) is more preferable.

(A) = 0.001 to 0.500%
(B) = 0.010 to 0.100%
(C) = 0.020 to 0.050%

Si is an element that is effective as a deoxidizer and that improves oxidation resistance and high-temperature salt-damage resistance. An excessive Si content, however, reduces normal-temperature ductility. The Si content is thus Content (A) below. In view of toughness and picklability, Content (B) is preferable. Further, in view of productivity, Content (C) is preferable.

(A) = 0.01 to 5.00%
(B) = 0.10 to 1.00%
(C) = 0.20 to 0.40%

Mn, which is an element contained as a deoxidizer, contributes to increasing the high-temperature strength in an intermediate temperature range. An excessive Mn content, however, forms Mn oxides on a surface layer at high temperature, which easily causes a scale adhesion failure or abnormal oxidation. Especially when Mn is contained together with Mo and W, abnormal oxidation is likely to occur depending on the Mn content. The Mn content is thus Content (A) below. Further, in view of picklability and normal-temperature ductility in producing the steel sheet, Content (B) is preferable. Content (C) is more preferable.

(A) = 0.010 to 12.000%
(B) = 0.400 to 2.000%
(C) = 1.000 to 1.500%

P is impurities mixed mainly from a material in steelmaking refining. A high content of P reduces toughness and weldability. The P content is thus preferably reduced as low as possible, but a P content of less than 0.001%, which requires the use of a low-P material, increases costs. The P content in the invention is thus 0.001% or more. At a P content exceeding 0.100%, steel excessively hardens, and corrosion resistance, toughness, and picklability deteriorate. The upper limit of the P content is thus 0.100%. In view of material costs, the P content is preferably in a range from 0.008 to 0.080%, more preferably in a range from 0.010 to 0.050%.

S is an element deteriorating corrosion resistance and oxidation resistance. However, bonding S with Ti and C improves workability and bonding S with Cr, Mn, and the like forms sulfides to exhibit lubricity. Since the above effects are exhibited at a S content of 0.0001% or more, the lower limit of the S content is 0.0001%. On the other hand, an excessive S content causes S to bond with Ti and C, reducing a solute Ti content (a content of Ti forming a solid solution) and making precipitates coarse. In order to prevent reduction in high-temperature strength, the upper limit of the S content is 1.0000%. Further, in view of refining costs and high-temperature oxidation properties, the S content is preferably in a range from 0.0005 to 0.0500%, more preferably in a range from 0.0010 to 0.0100%.

Cr is an essential element for providing oxidation resistance and corrosion resistance in the invention. A small content of Cr fails to provide especially the oxidation resistance, and an excessive content of Cr reduces workability and toughness. The Cr content is thus Content (A) below. Further, in view of productivity and scale releasability, Content (B) is preferable. Content (C) is more preferable.

(A) = 10.0 to 35.0%
(B) = 10.5 to 15.0%
(C) = 11.0 to 13.0%

Ni is an element improving oxidation resistance, toughness, and high-temperature strength and is contained as needed. An excessive Ni content, however, increases costs, and thus the Ni content is Content (A) below. In view of productivity, Content (B) is preferable. Content (C) is more preferable.

(A) = 0.010 to 5.000%
(B) = 0.030 to 0.600%
(C) = 0.050 to 0.080%

Cu is an element effective in improving corrosion resistance. Although precipitation strengthening through ε-Cu precipitation improves temper softening resistance and high-temperature strength, an excessive Cu content reduces hot workability. The Cu content is thus Content (A) below. Further, in view of thermal fatigue properties, productivity, and weldability, Content (B) is preferable. Content (C) is more preferable.

(A) = 0.0010 to 3.0000%
(B) = 0.0100 to 2.0000%
(C) = 0.2000 to 1.6000%

Mo, which is an element effective in solid solution strengthening at high temperature, improves temper softening resistance, corrosion resistance, and high-temperature salt-damage resistance. An excessive Mo content considerably deteriorates normal-temperature ductility and oxidation resistance, and thus the Mo content is Content (A) below. Further, in view of thermal fatigue properties and productivity, Content (B) is preferable. Content (C) is more preferable.

(A) = 0.0010 to 3.0000%
(B) = 0.0100 to 1.0000%
(C) = 0.0300 to 0.5000%

Nb is an element that is effective in improving temper softening resistance and high-temperature strength through solid solution strengthening and precipitation strengthening of fine precipitates. Nb also serves to fix C and N as carbonitrides, contributing to the growth of recrystallization texture that affects corrosion resistance and an r value of a product sheet (hot-rolled and annealed sheet). An excessive Nb content hardens steel and deteriorates productivity. The Nb content is thus Content (A) below. Further, in view of material costs and toughness, Content (B) is preferable. Content (C) is more preferable.

(A) = 0.0010 to 1.0000%
(B) = 0.0100 to 0.7000%
(C) = 0.1000 to 0.5000%

V is an element improving corrosion resistance. An excessive V content, however, deteriorates oxidation resistance and coarsens precipitates to reduce temper softening resistance and high-temperature strength. The V content is thus Content (A) below. Further, in view of production costs and productivity, Content (B) is preferable. Content (C) is more preferable.

(A) = 0.0010 to 1.0000%
(B) = 0.0030 to 0.5000%
(C) = 0.1000 to 0.4000%

The steel sheet of the invention is further characterized by having a hardening hardness index A of 200 to 800. The index A is represented by a formula below using contents of chemical components. In the formula below, [% chemical symbol] represents a content (mass%) of the chemical element. At a hardening hardness index A of 200 or more, sufficient hardness of the steel sheet used as a brake disc rotor is obtainable. At a hardening hardness index A exceeding 800, the hardening hardness is excessively large to make toughness in use insufficient.

$$A = 2566[\%C] + 1282[\%N] - 12[\%Si] + 4[\%Cu] - 6[\%Mo] - 184[\%Nb] - 125[\%V] + 239$$

In the invention, a balance consists of Fe and impurities. Further, in place of a part of Fe above, chemical components below may be contained as needed.

Ti is an element that improves corrosion resistance, intergranular corrosion resistance, normal-temperature ductility, and deep drawability when bonded to C, N, or S. Further, when Ti is contained together with Nb and Mo, a moderate content of Ti results in the increase in a solute Nb content (a content of Nb forming a solid solution) and a solute Mo content (a content of Mo forming a solid solution) in hot-rolled annealing and the improvement in high-temperature strength, enhancing temper softening resistance and thermal fatigue properties. Since the above effects are exhibited at a Ti content of 0.001% or more, the lower limit of the Ti content is 0.001%.
At a Ti content exceeding 1.00%, a solute Ti content is increased to reduce normal-temperature ductility, and coarse Ti precipitates that would be a starting point for cracking in hole expansion are formed to deteriorate press formability. Ti also deteriorates oxidation resistance, and thus the Ti content is 1.00% or less. In view of toughness and surface flaw occurrence, the Ti content is preferably in a range from 0.001 to 0.20%.

B is an element improving secondary workability of a product in press forming, high-temperature strength, and thermal fatigue properties. B enables fine precipitation such as Laves phases and provides long-term stability for the precipitation strengthening, contributing to inhibiting the strength reduction and improving the thermal fatigue life. The effects are exhibited at a B content of 0.0001% or more. An excessive B content hardens steel, deteriorates intergranular corrosiveness and oxidation resistance, and causes weld cracking. The B content is thus 0.0100% or less. Further, in view of corrosion resistance and production costs, the B content is preferably in a range from 0.0001 to 0.0050%, more preferably in a range from 0.0001 to 0.0020%.

Al, which is an element to be contained as a deoxidizing element, improves oxidation resistance. Al is also useful for improving high-temperature strength and temper softening resistance as a solid solution strengthening element. This effect is stably exhibited at an Al content of 0.001% or more. An excessive Al content hardens steel to significantly reduce uniform elongation and toughness, and thus the upper limit of the Al content is 4.0%. In view of surface flaw occurrence, weldability, and productivity, the Al content is preferably in a range from 0.003 to 2.0%.

Similar to Mo, W is an element effective in solid solution strengthening at high temperature and forms Laves phases ($Fe_2W$) to provide precipitation strengthening. Especially when W is contained together with Nb and Mo, Laves phases of $Fe_2$ (Nb, Mo, W) precipitate. In this case, W serves to inhibit coarsening of the Laves phases to improve precipitation strengthening capability and temper softening resistance. This effect is exhibited at a W content of 0.001% or more. On the other hand, a W content exceeding 3.0% increases costs and reduces normal-temperature ductility. The upper limit of W content is thus 3.0%. Further, in view of productivity, toughness at low temperature, and oxidation resistance, the W content is preferably in a range from 0.001 to 1.5%.

Sn, which is an element improving corrosion resistance, improves high-temperature strength in an intermediate temperature range. Sn is thus contained as needed. The above effects are exhibited at a Sn content of 0.001% or more. On the other hand, a Sn content exceeding 1.00% considerably reduces productivity and toughness, and thus the Sn content is 1.00% or less. Further, in view of oxidation resistance and production costs, the Sn content is preferably in a range from 0.01 to 0.10%.

Mg, which may be contained as a deoxidizing element, refines a slab structure to contribute to formability improvement. Further, Mg oxides serve as precipitation sites for carbonitrides such as Ti(C, N) and Nb(C, N) to enable finely dispersed precipitation. This effect is exhibited at a Mg content of 0.0001% or more, contributing to toughness improvement. An excessive Mg content, however, deteriorates weldability, corrosion resistance, and surface quality. The upper limit of the Mg content is thus 0.0100%. In view of refining costs, the Mg content is preferably in a range from 0.0003 to 0.0010%.

Sb contributes to improving corrosion resistance and high-temperature strength, and thus is contained at 0.001% or more as needed. A Sb content exceeding 0.50% may excessively cause slab cracking and ductility reduction in producing the steel sheet, and thus the upper limit of the Sb content is 0.50%. Further, in view of refining costs and productivity, the Sb content is preferably in a range from 0.01 to 0.30%.

Similar to Ti and Nb, Zr is a carbonitride forming element and improves corrosion resistance and deep drawability. Zr is thus contained as needed. The above effects are exhibited at a Zr content of 0.001% or more. On the other hand, a Zr content exceeding 1.000% considerably reduces productivity, and thus the Zr content is 1.000% or less. Further, in view of costs and surface quality, the Zr content is preferably in a range from 0.001 to 0.200%.

Ta and Hf contribute to toughness improvement by being bonded to C and N, and thus are each contained at 0.001% or more as needed. When Ta and Hf are each contained exceeding 1.00%, costs increase and productivity considerably deteriorates. The upper limit of each of Ta and Hf contents is thus 1.00%. Further, in view of refining costs and productivity, the Ta and Hf contents are each preferably in a range from 0.01 to 0.08%.

Co, which contributes to improving high-temperature strength, is contained at 0.001% or more as needed. A Co content exceeding 1.00% deteriorates toughness, and thus the upper limit of the Co content is 1.00%. Further, in view of refining costs and productivity, the Co content is preferably in a range from 0.01 to 0.10%, more preferably in a range from 0.01 to 0.03%.

Ca may be contained for desulfurization, of which effect is exhibited at a Ca content of 0.0001% or more. A Ca content exceeding 0.0200%, however, generates coarse CaS to deteriorate toughness and corrosion resistance. The upper limit of the Ca content is thus 0.0200%. Further, in view of refining costs and productivity, the Ca content is preferably in a range from 0.0003 to 0.0020%.

REM may be contained as needed to improve toughness and oxidation resistance through making various precipitates fine. The above effect is exhibited at a REM content of 0.001% or more. A REM content exceeding 0.50%, however, considerably deteriorates castability and reduces ductility. The upper limit of the REM content is thus 0.50%. Further, in view of refining costs and productivity, the REM content is preferably in a range from 0.001 to 0.05%. REM (rare-earth elements) collectively refers to two elements of scandium (Sc) and yttrium (Y) and fifteen elements (lanthanoid) from lanthanum (La) to lutetium (Lu) according to the general definition. These elements may be contained alone or may be contained in a form of a mixture.

Ga may be contained at 0.5000% or less to improve corrosion resistance and inhibit hydrogen embrittlement. In order to form sulfides and hydrides, the lower limit of the Ga content is preferably 0.0001%. Further, in view of productivity, costs, ductility, and toughness, the Ga content is preferably 0.0020% or less.

Although other components are not specifically defined in the invention, 0.001% to 0.1% of Bi or the like may be contained in the invention as needed. It should be noted that common harmful elements such as AS and Pb and impurity elements are preferably contained as low as possible.

In view of productivity (hardenability) and formability in molding as well as temper softening resistance and high-temperature strength in use, it is important for the invention that precipitates in a product sheet (hot-rolled and annealed sheet) are finely present. In order to achieve the above, it is required that the respective chemical components should be controlled appropriately, the dislocation recovery should not be likely to occur in hot rolling, and dislocation should serve as nucleation sites. In order to inhibit the dislocation recovery in hot rolling, the finishing temperature for hot rolling is 800 degrees C or less, the cooling rate for hot rolling is 10 degrees C/sec or more, and the winding temperature for hot rolling is 550 degrees C or less. Further, it is also found out that precipitates need to have a specific size and density in a product sheet (hot-rolled and annealed sheet). The precipitates are classified into the Cr carbonitride precipitate and any other precipitates. Most of the any other precipitates are carbonitrides and intermetallic compounds of Fe, Ti, Nb, V, Cu, Mo, W, Zr, Ta, Hf, and the like, and metal Cu.

Specifically, it is defined that precipitates present in a mother phase have an average particle size of 2 $\mu$m or less and a density of 0.01 to 20 pieces/$\mu$m$^2$ in a stainless steel sheet for a brake disc rotor (after hot-rolled sheet annealing). Some precipitates do not dissolve at a temperature for the heat treatment of hardening. Cr carbonitrides dissolve at that temperature, and any other precipitates hardly dissolve at that temperature.

Hot stamping or high-frequency hardening is used for machining the steel sheet into a disc rotor. Typically, the heating time for the heat treatment of hardening is very short in light of productivity. In order to obtain sufficient hardness as a disc rotor, even in the short heating, Cr carbonitrides precipitating in hot rolling or hot-rolled sheet annealing need to dissolve to provide a solute C and a solute N (C and N forming a solid solution). Fine Cr carbonitrides easily dissolve to contribute to providing the solute C and solute N, thus improving hardenability. When precipitates in a mother phase are finely present to have an average particle size of 2 $\mu$m or less and a density of 0.01 to 20 pieces/$\mu$m$^2$, Cr carbonitrides dissolve even through the short heating of the heat treatment of hardening. At an average particle size exceeding 2 $\mu$m, Cr carbonitrides fail to perfectly dissolve through the short heating of the heat treatment of hardening, and the solute C and solute N are not obtained sufficiently, making the hardening hardness insufficient. A long heating time deteriorates productivity.

Any other precipitates than Cr carbonitrides hardly dissolve through heating of the heat treatment of hardening and are finely present in a product obtained after completion of molding and hardening. This inhibits the movement of dislocation, contributing to the improvement in temper softening resistance and the inhibition of high-temperature strength reduction. Fine precipitates are not likely to be a starting point for cracking during machining, improving formability.

When precipitates in a mother phase are finely present to have an average particle size of 2 $\mu$m or less and a density of 0.01 to 20 pieces/$\mu$m$^2$, the dislocation movement is effectively inhibited to contribute to improving temper softening resistance and high-temperature strength.

Participates having an average particle size exceeding 2 $\mu$m are not likely to serve as the resistance to dislocation movement, contributing less to the improvement in temper softening resistance and high-temperature strength. Further, participates having an average particle size exceeding 2 $\mu$m are likely to be a starting point for cracking in hot stamping or in use, reducing formability. Precipitates having a density of less than 0.01 pieces/$\mu$m$^2$ make the pinning interval in dislocation large, and have difficulty in serving as the resistance to dislocation movement. Precipitates having a density exceeding 20 pieces/$\mu$m$^2$ excessively enhance strength to easily cause cracking. Accordingly, it is defined that precipitates present in a mother phase have an average particle size of 2 $\mu$m or less and a density of 0.01 to 20 pieces/$\mu$m$^2$ after hot-rolled sheet annealing.

The average particle size of precipitates is preferably in a range from 5 nm to 1.5 $\mu$m, more preferably in a range from 5 nm to 1.0 $\mu$m. The density of precipitates is preferably in a range from 0.1 pieces/$\mu$m$^2$ to 20 pieces/$\mu$m$^2$, more preferably in a range from 1 piece/$\mu$m$^2$ to 20 pieces/$\mu$m$^2$.

The stainless steel sheet applicable to a disc rotor is thus successfully provided.

A precipitate determination method may include observation with a transmission electron microscope (e.g., 200kV field emission transmission electron microscope JEM2100F produced by JEOL Ltd.) and analysis with an EDS device associated with the microscope (e.g., 200kV field emission transmission electron microscope JEM2100F produced by JEOL Ltd.). A sample was taken from the steel sheet to enable observation at t/4-depth in a sheet thickness direction (t was a steel sheet thickness) through ion milling. Observation and analysis were performed at randomly selected 10 points at a magnification of fifty-thousand. This magnification enables substantially uniform observation for precipitates. Further, with the EDS device, the composition of Fe, Cr, Si, Mn, Ti, Nb, V, Cu, Mo, W, Zr, Ta, and Hf was quantified by mass% at the same observation points. Each of the quantified substances was determined as the precipitate, in a case where a value equal to or more than the content as the steel sheet component was detected. Then, the sample was observed in a similar manner as above, only the precipitates in the observation points were colored, and image processing was performed. After that, the particle size of each precipitate was calculated in terms of the equivalent circle diameter using an image analysis software "Imaged" produced by NIH, and an average particle size and average density at five viewing fields were calculated.

The martensitic stainless steel sheet for the brake disc rotor of the invention is characterized in that breaking elongation at 1,050 degrees C is 50% or more, providing the formability excellent as the steel sheet.

The martensitic stainless steel sheet for the brake disc rotor of the invention is characterized in that, relative to hardness obtained by performing a hot-stamping simulated heat treatment (simulated heat treatment) including heating to 1,050 degrees C, retaining for 5 seconds or more, and then water-cooling, a decrease in hardness after 10-minute tempering at 700 degrees C performed subsequent to the simulated heat treatment is 150 or less in terms of Hv. The temper softening resistance excellent as the brake disc rotor is thus achieved.

The martensitic stainless steel sheet for the brake disc rotor of the invention is characterized in that 0.2% proof stress at 700 degrees C obtained by performing the hot-stamping simulated heat treatment is 50 MPa or more. The high-temperature strength excellent as the brake disc rotor is thus achieved.

The brake disc rotor of the invention is made using the martensitic stainless steel sheet for the brake disc rotor of the invention. Specifically, the martensitic stainless steel sheet for the brake disc rotor of the invention is formed into a shape of the brake disc rotor by hot stamping, and the brake disc rotor is hardened through the heat treatment of hot stamping. The brake disc rotor is excellent in temper softening resistance and high-temperature strength.

Next, a production method will be described.

The production method of the stainless steel sheet for the brake disc rotor according to the invention includes steps of steelmaking, hot rolling, annealing, and pickling. In the steelmaking, preferably, steel that contains the above essential components and component(s) contained as needed is melted in a converter furnace and then subjected to secondary refining. The molten steel is formed into a slab according to a known casting process (continuous casting).

The slab is heated to a predetermined temperature and hot-rolled to have a predetermined thickness through continuous rolling. The hot rolling is performed by rolling the slab using a hot rolling mill with a plurality of stands, which is followed by winding. Carbonitrides that finely precipitate through annealing after the hot rolling can form a solid solution in a mother phase even with the short heating of hot stamping. In order to finely precipitate the carbonitrides, it is required that dislocation recovery is not likely to occur in hot rolling and dislocation serves as nucleation sites. In order to inhibit the dislocation recovery in hot rolling, the finishing temperature for hot rolling is 800 degrees C or less and the winding temperature for hot rolling is 550 degrees C or less. Preferably, in view of productivity, the finishing temperature is 750 degrees C or less and the winding temperature is 500 degrees C or less. More preferably, the finishing temperature is 700 degrees C or less and the winding temperature is 450 degrees C or less. The finishing temperature is still more preferably less than 700 degrees C. The cooling rate from the finishing to the winding is preferably from 10 degrees C/sec to less than 25 degrees C/sec.

The coil that has been hot-rolled and then wound is annealed in an annealing furnace at a predetermined temperature, which is followed by pickling. The annealing is performed at a temperature of 820 to 900 degrees C for 3 to 5 hours. Any known pickling method is adoptable to the pickling.

The martensitic stainless steel sheet for the brake disc rotor produced as described above may have a thickness in a range from 2.0 mm to 15.0 mm in use. In view of stiffness and weight as the brake disc rotor, the thickness is preferably in a range from 3.0 mm to 13.0 mm, more preferably in a range from 4.1 mm to 9.0 mm. Examples

Steel having the component composition shown in Tables 1 and 2 was melted and casted into an ingot, and the ingot was hot-rolled into a hot-rolled sheet with a thickness of 6 mm. The finishing temperature for hot rolling and the winding temperature for hot rolling shown in Tables 3 and 4 were used, and the cooling rate from the finishing to the winding was 12 degrees C/sec. The obtained hot-rolled sheet was retained at 850 degrees C for four hours and then cooled to room temperature, providing a hot-rolled and annealed sheet. Nos. A1 to A34 in Tables 1 and 2 are steels of the invention, and Nos. B1 to B13 in Table 2 are comparative steels. Numerical values out of respective ranges of the invention are underlined.

For evaluating the press formability at high temperature of the hot-rolled and annealed sheet before hot stamping, a high-temperature tensile test piece was taken from the hot-rolled and annealed sheet so that a rolling direction was a tensile direction. The tensile test was performed at 1,050 degrees C and breaking elongation was measured (in accordance with JIS G 0567, and numerical values were rounded off to the closest whole number). When the breaking elongation at 1,050 degrees C is 50% or more, the steel sheet is formable into a hat shape. Thus, steels having breaking elongation at 1,050 degrees C of 50% or more were evaluated as passed (indicated by "A" for press formability in Tables 3 and 4). Steels not evaluated as passed were indicated by "X" in Tables 3 and 4. The same applies to the evaluation for hardenability, temper softening resistance after hot stamping, and high-temperature strength of the steel sheet.

The hot-rolled and annealed sheet was subjected to a hot-stamping simulated heat treatment (hereinafter, simply referred to as "simulated heat treatment") in which the sheet was heated to 1,050 degrees C, retained for five seconds or more, and then water-cooled. After the simulated heat treatment, the steel sheet was subjected to pickling. The steel sheet after the simulated heat treatment was evaluated for hardenability, temper softening resistance after hot stamping, and high-temperature strength.

For the hardenability evaluation, a test piece subjected to a heat treatment including heating to 900 degrees C, retaining for one second, and water-cooling (hereinafter referred to as "900 degrees C hardening heat-treatment material") and a test piece subjected to a heat treatment including heating to 1,100 degrees C, retaining for one second, and water-cooling (hereinafter referred to as "1,100 degrees C hardening heat-treatment material") were prepared, and the Vickers hardness was calculated (in accordance with JIS Z 2244; an average value at a t/2 portion and with a load of 5 kg and n= 5 was determined as hardness; and numerical values were rounded off to the closest whole number). In a case where the difference in hardness between the 900 degrees C hardening heat-treatment material and the 1,100 degrees C hardening heat-treatment material is 50 or less in terms of Hv, application to a typical disc rotor is possible. Thus, steels with a difference in hardness between the 900 degrees C hardening heat-treatment material and the 1,100 degrees C hardening heat-treatment material of 50 or less in terms of Hv were evaluated as passed (indicated by "A" for hardenability in Tables 3 and 4).

For the evaluation of temper softening resistance, a material subjected to the simulated heat treatment (hereinafter referred to as "simulated heat treatment material") and a test piece obtained by subjecting the simulated heat treatment material to tempering at 700 degrees C for 10 minutes (hereinafter referred to as "temper softening treatment material") were prepared, and the Vickers hardness was calculated (in accordance with JIS Z 2244; an average value at a t/2 portion and with a load of 5 kg and n= 5 was determined as hardness; and numerical values were rounded off to the closest whole number). In a case where the difference in hardness between the simulated heat treatment material and the temper softening treatment material is 150 or less in terms of Hv, application to a typical disc rotor is possible. Thus, steels with a difference in hardness between the simulated heat treatment material and the temper softening treatment material of 150 or less in terms of Hv were evaluated as passed (indicated by "A" for temper softening resistance in Tables 3 and 4).

For evaluating the strength in use, a high-temperature tensile test piece was taken from the simulated heat treatment material so that a rolling direction was a tensile direction. The tensile test was performed at 700 degrees C, and 0.2% proof stress was measured (in accordance with JIS G 0567, and numerical values were rounded off to the closest whole number). When the 0.2% proof stress at 700 degrees C is 50 MPa or more, the steel is applicable to a typical disc rotor and reducible in thickness. Thus, steels whose 0.2% proof stress at 700 degrees C was 50 MPa or more were evaluated as passed (indicated by "A" for high-temperature strength in Tables 3 and 4).

## Table 1

| Steel type No. | Chemical composition (mass%, balance: Fe and impurities) | | | | | | | | | | | | | Hardening hardness index A |
|---|---|---|---|---|---|---|---|---|---|---|---|---|---|---|
| | C | N | Si | Mn | P | S | Cr | Ni | Cu | Mo | Nb | V | Others | |
| A1 | 0.005 | 0.033 | 0.28 | 1.430 | 0.022 | 0.0019 | 12.1 | 0.051 | 0.3384 | 0.0248 | 0.1932 | 0.1355 | - | 240 |
| A2 | 0.262 | 0.020 | 0.39 | 1.324 | 0.013 | 0.0014 | 12.8 | 0.061 | 0.5777 | 0.0285 | 0.4983 | 0.3589 | - | 799 |
| A3 | 0.028 | 0.002 | 0.26 | 1.488 | 0.013 | 0.0026 | 12.0 | 0.244 | 1.1598 | 0.0218 | 0.3167 | 0.3835 | - | 209 |
| A4 | 0.005 | 0.471 | 0.33 | 1.128 | 0.019 | 0.0029 | 12.9 | 0.121 | 1.5030 | 0.0499 | 0.4981 | 0.3989 | - | 716 |
| A5 | 0.033 | 0.015 | 0.02 | 1.037 | 0.016 | 0.0016 | 11.3 | 0.152 | 0.2782 | 0.0264 | 0.0201 | 0.0150 | - | 338 |
| A6 | 0.063 | 0.098 | 4.82 | 1.220 | 0.016 | 0.0028 | 11.1 | 0.415 | 0.5426 | 0.0250 | 0.0213 | 0.0205 | - | 464 |
| A7 | 0.032 | 0.211 | 0.12 | 0.012 | 0.027 | 0.0021 | 12.2 | 0.053 | 0.9621 | 0.0169 | 0.0159 | 0.0201 | - | 589 |
| A8 | 0.052 | 0.045 | 0.97 | 11.432 | 0.028 | 0.0025 | 12.4 | 0.129 | 1.4862 | 0.0181 | 0.0281 | 0.0270 | - | 415 |
| A9 | 0.036 | 0.021 | 0.23 | 0.433 | 0.002 | 0.0023 | 12.5 | 0.524 | 0.0295 | 0.0139 | 0.2471 | 0.0151 | - | 307 |
| A10 | 0.044 | 0.034 | 0.39 | 1.889 | 0.091 | 0.0012 | 11.7 | 0.285 | 0.0119 | 0.0133 | 0.3137 | 0.0180 | - | 330 |
| A11 | 0.050 | 0.031 | 0.37 | 1.082 | 0.009 | 0.0002 | 12.2 | 0.529 | 0.0264 | 0.0161 | 0.3780 | 0.0285 | - | 330 |
| A12 | 0.053 | 0.037 | 0.33 | 1.473 | 0.077 | 0.9180 | 11.5 | 0.602 | 0.0120 | 0.0104 | 0.4028 | 0.0168 | - | 343 |
| A13 | 0.033 | 0.043 | 0.40 | 1.329 | 0.011 | 0.0006 | 10.1 | 0.123 | 0.0111 | 0.0233 | 0.0238 | 0.1839 | - | 347 |
| A14 | 0.033 | 0.023 | 0.35 | 1.067 | 0.042 | 0.0477 | 34.8 | 0.339 | 0.0191 | 0.0210 | 0.0107 | 0.2329 | - | 317 |
| A15 | 0.030 | 0.022 | 0.31 | 1.257 | 0.021 | 0.0017 | 10.6 | 0.337 | 0.0020 | 0.0222 | 0.0202 | 0.3342 | - | 294 |
| A16 | 0.049 | 0.044 | 0.39 | 1.023 | 0.021 | 0.0140 | 14.5 | 0.338 | 2.9543 | 0.0159 | 0.0295 | 0.3523 | - | 378 |
| A17 | 0.053 | 0.042 | 0.23 | 1.016 | 0.030 | 0.0026 | 11.7 | 0.209 | 0.1157 | 0.0015 | 0.0123 | 0.0122 | Ti:0.11, B:0.0004 | 422 |
| A18 | 0.059 | 0.035 | 0.33 | 1.083 | 0.025 | 0.0023 | 12.9 | 0.302 | 1.9623 | 2.9473 | 0.0178 | 0.0280 | Mg:0.0005, Sb:0.05, Zr:0.11 | 416 |
| A19 | 0.054 | 0.032 | 0.36 | 1.143 | 0.020 | 0.0030 | 11.7 | 0.521 | 0.2217 | 0.0153 | 0.0012 | 0.0295 | Al:1.8, W:0.3, Sn:0.08 | 411 |
| A20 | 0.045 | 0.037 | 0.35 | 1.497 | 0.023 | 0.0015 | 12.0 | 0.269 | 1.5891 | 0.9125 | 0.9840 | 0.0259 | Ta:0.04, Hf:0.05, Co:0.03, Ca:0.0009 | 215 |
| A21 | 0.044 | 0.021 | 0.39 | 1.219 | 0.029 | 0.0030 | 11.3 | 0.086 | 0.0204 | 0.0325 | 0.0138 | 0.0016 | - | 372 |
| A22 | 0.060 | 0.044 | 0.22 | 1.432 | 0.011 | 0.0016 | 11.3 | 0.516 | 0.0170 | 0.4872 | 0.6512 | 0.9635 | - | 204 |
| A23 | 0.040 | 0.045 | 0.29 | 1.406 | 0.018 | 0.0023 | 11.0 | 0.077 | 0.0150 | 0.0230 | 0.1445 | 0.0038 | - | 370 |
| A24 | 0.057 | 0.030 | 0.26 | 1.225 | 0.019 | 0.0012 | 11.8 | 0.059 | 0.0253 | 0.0168 | 0.4733 | 0.4753 | - | 273 |
| A25 | 0.050 | 0.020 | 0.28 | 1.046 | 0.026 | 0.0030 | 12.4 | 0.477 | 0.0176 | 0.0229 | 0.0212 | 0.1257 | - | 371 |

Examples of the invention

Table 3

| Steel type No. | Chemical composition (mass%, balance: Fe and impurities) | | | | | | | | | | | | | Hardening hardness index A |
|---|---|---|---|---|---|---|---|---|---|---|---|---|---|---|
| | C | N | Si | Mn | P | S | Cr | Ni | Cu | Mo | Nb | V | Others | |
| A26 | 0.052 | 0.039 | 0.21 | 1.133 | 0.023 | 0.0025 | 11.4 | 0.183 | 0.0209 | 0.0197 | 0.0114 | 0.3984 | - | 369 |
| A27 | 0.030 | 0.021 | 0.32 | 1.329 | 0.018 | 0.0028 | 12.3 | 0.152 | 0.0151 | 0.0285 | 0.0289 | 0.0167 | Ti:0.16, B:0.0004, Al:0.5, W:0.02, Sn:0.03, Mg:0.0006, Sb:0.02, Zr:0.022, Ta:0.05, Hf:0.020, Co:0.02, Ca:0.0011, REM:0.03, Ga:0.0018, Bi:0.01 | 333 |
| A28 | 0.058 | 0.046 | 0.35 | 1.386 | 0.028 | 0.0030 | 11.4 | 0.011 | 0.0167 | 0.0114 | 0.0259 | 0.0221 | - | 435 |
| A29 | 0.035 | 0.049 | 0.31 | 1.485 | 0.026 | 0.0010 | 12.6 | 4.982 | 0.0104 | 0.0284 | 0.0120 | 0.0293 | - | 382 |
| A30 | 0.046 | 0.034 | 0.28 | 1.337 | 0.030 | 0.0017 | 11.9 | 0.042 | 0.0107 | 0.0283 | 0.0134 | 0.0175 | - | 392 |
| A31 | 0.045 | 0.029 | 0.32 | 1.191 | 0.020 | 0.0011 | 12.6 | 0.588 | 0.0267 | 0.0132 | 0.0228 | 0.0273 | - | 381 |
| A32 | 0.032 | 0.048 | 0.32 | 1.411 | 0.015 | 0.0024 | 12.0 | 0.061 | 0.0114 | 0.0118 | 0.0173 | 0.0269 | - | 372 |
| A33 | 0.041 | 0.049 | 0.38 | 1.046 | 0.016 | 0.0011 | 12.4 | 0.077 | 0.0264 | 0.0101 | 0.0140 | 0.0116 | - | 398 |
| B1 | 0.554 | 0.049 | 0.39 | 1.449 | 0.021 | 0.0029 | 11.7 | 0.220 | 0.0108 | 0.0277 | 0.0256 | 0.0192 | - | 1711 |
| B2 | 0.039 | 0.519 | 0.32 | 1.301 | 0.026 | 0.0018 | 11.7 | 0.441 | 0.0207 | 0.0144 | 0.0221 | 0.0174 | - | 995 |
| B3 | 0.043 | 0.037 | 5.08 | 1.492 | 0.025 | 0.0013 | 11.6 | 0.389 | 0.0268 | 0.0196 | 0.0188 | 0.0280 | - | 330 |
| B4 | 0.050 | 0.039 | 0.34 | 0.008 | 0.014 | 0.0016 | 12.0 | 0.236 | 0.0272 | 0.0182 | 0.0293 | 0.0145 | - | 407 |
| B5 | 0.032 | 0.050 | 0.30 | 1.142 | 0.122 | 0.0027 | 11.6 | 0.059 | 0.0188 | 0.0119 | 0.0269 | 0.0148 | - | 374 |
| B6 | 0.044 | 0.038 | 0.33 | 1.277 | 0.023 | 1.0639 | 12.0 | 0.525 | 0.0215 | 0.0232 | 0.0297 | 0.0259 | - | 388 |
| B7 | 0.036 | 0.047 | 0.21 | 1.424 | 0.021 | 0.0017 | 36.6 | 0.391 | 0.0116 | 0.0277 | 0.0197 | 0.0162 | - | 384 |
| B8 | 0.038 | 0.030 | 0.26 | 1.209 | 0.030 | 0.0014 | 11.6 | 0.520 | 0.0008 | 0.0138 | 0.0221 | 0.0295 | - | 363 |
| B9 | 0.041 | 0.029 | 0.22 | 1.138 | 0.019 | 0.0018 | 11.8 | 0.470 | 0.0181 | 0.0008 | 0.0102 | 0.0128 | - | 374 |
| B10 | 0.040 | 0.049 | 0.24 | 1.315 | 0.016 | 0.0018 | 12.4 | 0.255 | 0.0106 | 0.0300 | 0.0007 | 0.0134 | - | 398 |
| B11 | 0.031 | 0.031 | 0.33 | 1.298 | 0.026 | 0.0025 | 12.7 | 0.252 | 0.0173 | 0.0204 | 0.0165 | 0.0009 | - | 350 |
| B12 | 0.060 | 0.050 | 0.31 | 1.267 | 0.011 | 0.0029 | 11.0 | 0.128 | 0.0290 | 0.0135 | 0.0119 | 0.0221 | Not satisfying production condition | 447 |
| B13 | 0.031 | 0.031 | 0.33 | 1.298 | 0.026 | 0.0025 | 12.7 | 0.008 | 0.0173 | 0.0204 | 0.0165 | 0.0009 | - | 350 |

Examples of the invention: A26–A33

Comparatives: B1–B13

12

| | Steel type No. | Production condition | | Precipitate | | Steel sheet quality | | Quality after simulated heat treatment | |
|---|---|---|---|---|---|---|---|---|---|
| | | Finishing temperature for hot rolling (°C) | Winding temperature for hot rolling (°C) | Average particle size (μm) | Density (pieces/μm²) | Hardenability — Difference in hardness between 900°C hardening and 1,100°C hardening (Hv) | Press formability — Breaking elongation at 1,050°C (%) | Temper softening resistance — Difference between hardening hardness and tempering hardness | High-temperature strength — 0.2% proof stress at 700°C (MPa) |
| 1 | A1 | 700 | 450 | 0.01 | 19.16 | A | A | A | A |
| 2 | A2 | 700 | 450 | 0.13 | 13.56 | A | A | A | A |
| 3 | A3 | 700 | 450 | 0.01 | 19.04 | A | A | A | A |
| 4 | A4 | 700 | 450 | 0.06 | 19.17 | A | A | A | A |
| 5 | A5 | 700 | 450 | 0.23 | 2.02 | A | A | A | A |
| 6 | A6 | 700 | 450 | 0.17 | 6.29 | A | A | A | A |
| 7 | A7 | 700 | 450 | 0.01 | 9.64 | A | A | A | A |
| 8 | A8 | 700 | 450 | 0.26 | 3.33 | A | A | A | A |
| 9 | A9 | 700 | 450 | 0.51 | 0.35 | A | A | A | A |
| 10 | A10 | 700 | 450 | 0.15 | 8.02 | A | A | A | A |
| 11 | A11 | 700 | 450 | 0.04 | 16.88 | A | A | A | A |
| 12 | A12 | 700 | 450 | 0.05 | 15.78 | A | A | A | A |
| 13 | A13 | 700 | 450 | 0.17 | 3.07 | A | A | A | A |
| 14 | A14 | 800 | 550 | 0.07 | 14.78 | A | A | A | A |
| 15 | A15 | 700 | 450 | 0.01 | 6.10 | A | A | A | A |
| 16 | A16 | 800 | 550 | 0.02 | 16.75 | A | A | A | A |
| 17 | A17 | 750 | 500 | 0.09 | 10.79 | A | A | A | A |
| 18 | A18 | 800 | 550 | 0.11 | 19.81 | A | A | A | A |
| 19 | A19 | 750 | 500 | 0.12 | 2.52 | A | A | A | A |
| 20 | A20 | 800 | 550 | 0.11 | 18.32 | A | A | A | A |
| 21 | A21 | 700 | 450 | 0.21 | 0.02 | A | A | A | A |
| 22 | A22 | 800 | 550 | 0.01 | 18.35 | A | A | A | A |
| 23 | A23 | 750 | 500 | 0.42 | 0.59 | A | A | A | A |
| 24 | A24 | 750 | 500 | 0.03 | 17.68 | A | A | A | A |
| 25 | A25 | 750 | 500 | 0.72 | 0.12 | A | A | A | A |

Examples of the invention

Table 4

| | Steel type No. | Production condition | | Precipitate | | Steel sheet quality | | Quality after simulated heat treatment | |
|---|---|---|---|---|---|---|---|---|---|
| | | Finishing temperature for hot rolling (°C) | Winding temperature for hot rolling (°C) | Average particle size (μm) | Density (pieces/μm²) | Hardenability — Difference in hardness between 900°C hardening and 1,100°C hardening (Hv) | Press formability — Breaking elongation at 1,050°C (%) | Temper softening resistance — Difference between hardening hardness and tempering hardness (Hv) | High-temperature strength — 0.2% proof stress at 700°C (MPa) |
| 26 | A26 | 750 | 500 | 1.52 | 0.03 | A | A | A | A |
| 27 | A27 | 800 | 550 | 0.49 | 0.04 | A | A | A | A |
| 28 | A28 | 700 | 450 | 0.12 | 0.04 | A | A | A | A |
| 29 | A29 | 700 | 450 | 0.46 | 0.01 | A | A | A | A |
| 30 | A30 | 700 | 450 | 0.18 | 0.02 | A | A | A | A |
| 31 | A31 | 700 | 450 | 0.01 | 0.05 | A | A | A | A |
| 32 | A32 | 700 | 450 | 0.02 | 0.05 | A | A | A | A |
| 33 | A33 | 700 | 450 | 0.14 | 0.10 | A | A | A | A |
| 34 | A33 | 680 | 450 | 0.12 | 0.28 | A | A | A | A |
| 1 | B1 | 700 | 450 | 4.27 | 0.011 | A | X | X | X |
| 2 | B2 | 700 | 450 | 4.82 | 0.009 | A | X | X | X |
| 3 | B3 | 700 | 450 | 5.82 | 0.007 | A | X | X | X |
| 4 | B4 | 700 | 450 | 0.31 | 0.075 | A | A | A | X |
| 5 | B5 | 700 | 450 | 0.15 | 0.083 | A | X | A | X |
| 6 | B6 | 700 | 450 | 0.50 | 0.027 | A | A | A | X |
| 7 | B7 | 700 | 450 | 2.60 | 0.014 | X | X | X | X |
| 8 | B8 | 700 | 450 | 0.09 | 0.004 | A | A | X | X |
| 9 | B9 | 700 | 450 | 0.31 | 0.005 | A | A | X | X |
| 10 | B10 | 700 | 450 | 0.12 | 0.005 | A | A | X | X |
| 11 | B11 | 700 | 450 | 0.05 | 0.004 | A | A | X | X |
| 12 | B12 | 850 | 600 | 2.22 | 0.036 | A | X | X | X |
| 13 | B13 | 700 | 450 | 0.42 | 0.096 | A | A | A | X |

Examples of the invention: 26–34
Comparatives: 1–13

As is clear from Tables 3 and 4, the examples of the invention are better in hardenability, press formability, temper softening resistance after the simulated heat treatment, and 0.2% proof stress at 700 degrees C of the steel sheets than comparatives. In a case where any one of the difference between the hardening hardness at 900 degrees C and the hardening hardness at 1,100 degrees C, the difference in hardness between before and after tempering, the breaking elongation at 1,050 degrees C, and the 0.2% proof stress at 700 degrees C was evaluated as failed, the steel was determined as not suitable for the use as the disc rotor. This reveals that the steels defined in the invention are

14

excellent in hardenability, temper softening resistance, formability, and high-temperature strength.

The C concentration exceeded the upper limit in Comparative B1 and the N concentration exceeded the upper limit in Comparative B2, resulting in precipitation of a large amount of coarse carbonitrides. Thus, Cr carbides failed to sufficiently form a solid solution through the simulated heat treatment, making the temper softening resistance bad. Further, coarse carbonitrides did not contribute to precipitation strengthening, but became a starting point for cracking, making the 0.2% proof stress at 700 degrees C and the press formability bad.

In comparative B3, the Si concentration exceeded the upper limit. Si enhanced activity of carbon to precipitate coarse carbides, making the temper softening resistance, the 0.2% proof stress at 700 degrees C, and the press formability insufficient.

In comparative B4, the Mn concentration was below the lower limit, making the 0.2% proof stress at 700 degrees C insufficient.

In comparative B5, the P concentration exceeded the upper limit to precipitate a large amount of coarse phosphides, making the 0.2% proof stress at 700 degrees C insufficient. Further, the steel was hardened to make the press formability insufficient.

In comparative B6, the S concentration exceeded the upper limit to coarsen Ti precipitates, making the 0.2% proof stress at 700 degrees C insufficient.

In comparative B7, the Cr concentration exceeded the upper limit to precipitate a large amount of coarse Cr carbonitrides, making the hardenability, the temper softening resistance, and the 0.2% proof stress at 700 degrees C insufficient. Further, the steel was hardened to make the press formability insufficient.

In comparative B8, the Cu concentration was below the lower limit and thus Cu precipitation was not sufficient. This resulted in insufficient precipitation strengthening, making the temper softening resistance and the 0.2% proof stress at 700 degrees C insufficient.

The Mo concentration was below the lower limit in Comparative B9, the Nb concentration was below the lower limit in Comparative B10, and the V concentration was below the lower limit in Comparative B11, and thus precipitates containing the respective elements failed to sufficiently precipitate. This resulted in insufficient precipitation strengthening, making the temper softening resistance and the 0.2% proof stress at 700 degrees C insufficient.

In comparative B12, the finishing temperature for hot rolling and the winding temperature for hot rolling exceeded the upper limits to excessively coarsen Cr carbonitrides and precipitates, making the temper softening resistance, the 0.2% proof stress at 700 degrees C, and the press formability bad.

In comparative B13, the Ni concentration was below the lower limit, making the 0.2% proof stress at 700 degrees C insufficient.

**Claims**

1. A martensitic stainless steel sheet for a brake disc rotor, comprising: 0.001 to 0.500 mass% of C; 0.001 to 0.500 mass% of N; 0.01 to 5.00 mass% of Si; 0.010 to 12.000 mass% of Mn; 0.001 to 0.100 mass% of P; 0.0001 to 1.0000 mass% of S; 10.0 to 35.0 mass% of Cr; 0.010 to 5.000 mass% of Ni; 0.0010 to 3.0000 mass% of Cu; 0.0010 to 3.0000 mass% of Mo; 0.0010 to 1.0000 mass% of Nb; 0.0010 to 1.0000 mass% of V; and a balance consisting of Fe and impurities, wherein

   precipitates in a mother phase have an average particle size of 2 $\mu$m or less and a density of 0.01 to 20 pieces/$\mu$m$^2$, and
   a hardening hardness index A represented by a formula below is in a range from 200 to 800,

   $$A = 2566[\%C] + 1282[\%N] - 12[\%Si] + 4[\%Cu] - 6[\%Mo] - 184[\%Nb] - 125[\%V] + 239.$$

2. The martensitic stainless steel sheet for the brake disc rotor according to claim 1, further comprising, in place of a part of the Fe, one or more of 0.001 to 1.00 mass% of Ti; 0.0001 to 0.0100 mass% of B; 0.001 to 4.0 mass% of Al; 0.001 to 3.0 mass% of W; 0.001 to 1.00 mass% of Sn; 0.0001 to 0.0100 mass% of Mg; 0.001 to 0.50 mass% of Sb; 0.001 to 1.000 mass% of Zr; 0.001 to 1.00 mass% of Ta; 0.001 to 1.00 mass% of Hf; 0.001 to 1.00 mass% of Co; 0.0001 to 0.0200 mass% of Ca; 0.001 to 0.50 mass% of REM; and 0.0001 to 0.5000 mass% of Ga.

3. The martensitic stainless steel sheet for the brake disc rotor according to claim 1 or 2, wherein breaking elongation at 1,050 degrees C is 50% or more.

4. The martensitic stainless steel sheet for the brake disc rotor according to any one of claims 1 to 3, wherein relative to hardness obtained by performing a hot-stamping simulated heat treatment, which is hereinafter simply referred to as a "simulated heat treatment", including heating to 1,050 degrees C, retaining for 5 seconds or more, and then water-cooling, a decrease in hardness after 10-minute tempering at 700 degrees C performed subsequent to the simulated heat treatment is 150 or less in terms of Hv.

5. The martensitic stainless steel sheet for the brake disc rotor according to any one of claims 1 to 4, wherein 0.2% proof stress at 700 degrees C obtained by performing a hot-stamping simulated heat treatment, which is hereinafter simply referred to as the "simulated heat treatment", including heating to 1,050 degrees C, retaining for 5 seconds or more, and then water-cooling is 50 MPa or more.

6. A brake disc rotor made using the martensitic stainless steel sheet for the brake disc rotor according to any one of claims 1 to 5.

7. A method of producing the martensitic stainless steel sheet for the brake disc rotor according to any one of claims 1 to 5, the method comprising making a finishing temperature for hot rolling 800 degrees C or less and making a winding temperature for hot rolling 550 degrees C or less.

## INTERNATIONAL SEARCH REPORT

| | International application No. |
|---|---|
| | **PCT/JP2022/004892** |

### A. CLASSIFICATION OF SUBJECT MATTER

*C21D 8/02*(2006.01)i; *C21D 9/00*(2006.01)i; *C22C 38/00*(2006.01)i; *C22C 38/60*(2006.01)i; *C21D 1/18*(2006.01)i; *F16D 65/12*(2006.01)i
FI: C22C38/00 302Z; C22C38/60; C21D8/02 D; F16D65/12 Z; C21D1/18 C; C21D9/00 A

According to International Patent Classification (IPC) or to both national classification and IPC

### B. FIELDS SEARCHED

Minimum documentation searched (classification system followed by classification symbols)

C21D8/02; C21D9/00; C22C38/00; C22C38/60; C21D1/18; F16D65/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-178419 A (NIPPON STEEL STAINLESS STEEL CORP.) 17 October 2019 (2019-10-17) | 1-7 |
| A | JP 2019-65373 A (NIPPON STEEL & SUMIKIN STAINLESS STEEL CORP.) 25 April 2019 (2019-04-25) | 1-7 |
| A | JP 2020-152959 A (NIPPON STEEL STAINLESS STEEL CORP.) 24 September 2020 (2020-09-24) | 1-7 |
| A | WO 2020/195915 A1 (NIPPON STEEL STAINLESS STEEL CORP.) 01 October 2020 (2020-10-01) | 1-7 |
| A | JP 2014-118613 A (NIPPON STEEL & SUMITOMO METAL CORP.) 30 June 2014 (2014-06-30) | 1-7 |
| A | JP 2019-518609 A (APERAM) 04 July 2019 (2019-07-04) | 1-7 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/004892**

| Patent document cited in search report | | | Publication date (day/month/year) | Patent family member(s) | | | Publication date (day/month/year) |
|---|---|---|---|---|---|---|---|
| JP | 2019-178419 | A | 17 October 2019 | (Family: none) | | | |
| JP | 2019-65373 | A | 25 April 2019 | (Family: none) | | | |
| JP | 2020-152959 | A | 24 September 2020 | (Family: none) | | | |
| WO | 2020/195915 | A1 | 01 October 2020 | EP | 3950969 | A1 | |
| | | | | CA | 3133206 | A1 | |
| | | | | KR | 10-2021-0129140 | A | |
| | | | | CN | 113661261 | A | |
| JP | 2014-118613 | A | 30 June 2014 | (Family: none) | | | |
| JP | 2019-518609 | A | 04 July 2019 | US | 2019/0127829 | A1 | |
| | | | | WO | 2017/182896 | A1 | |
| | | | | EP | 3445878 | A1 | |
| | | | | CA | 3022115 | A1 | |
| | | | | AU | 2017252037 | A1 | |
| | | | | KR | 10-2018-0136455 | A | |
| | | | | CN | 109415776 | A | |
| | | | | MX | 2018012841 | A | |
| | | | | BR | 112018071587 | A2 | |
| | | | | RU | 2018136969 | A | |
| | | | | SI | 3445878 | T1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4569360 B
- WO 2008044299 A
- WO 2007122754 A
- JP 5200332 B